# EUROPÄISCHE PATENTSCHRIFT

(11) **EP 4 217 785 B1**
(45) Veröffentlichungstag und Bekanntmachung des Hinweises auf die Patenterteilung: **05.11.2025**
(21) Anmeldenummer: 21778481.8
(22) Anmeldetag: 21.09.2021
(51) Int. Cl.: G03B 17/00, G02B 27/00, G02B 27/08

(54) **ABBILDUNGSSYSTEM, INSBESONDERE FÜR EINE KAMERA**
IMAGING SYSTEM, IN PARTICULAR FOR A CAMERA
SYSTÈME D'IMAGERIE, EN PARTICULIER POUR UNE CAMÉRA

(30) Priorität: 22.09.2020 LU 102084
(43) Veröffentlichungstag der Anmeldung: 02.08.2023
(73) Patentinhaber: K/Lens GmbH, 66121 Saarbrücken (DE)
(72) Erfinder: ILLGNER, Klaus, 82319 Starnberg (DE); SCHMITZ, Matthias, 66119 Saarbrücken (DE)
(74) Vertreter: Patentanwälte Bernhardt / Wolff Partnerschaft mbB
(86) Internationale Anmeldenummer: PCT/EP2021/075872
(87) Internationale Veröffentlichungsnummer: WO 2022/063746

(56) Entgegenhaltungen:
- MANAKOV ALKHAZUR ET AL: "A reconfigurable camera add-on for high dynamic range, multispectral, polarization, and light-field imaging", ACM TRANSACTIONS ON GRAPHICS, vol. 32, no. 4, 21 July 2013 (2013-07-21), US, pages 1 - 14, XP055798736, ISSN: 0730-0301, DOI: 10.1145/2461912.2461937
- KAZEMZADEH FARNOUD ET AL: "Multispectral Stereoscopic Imaging Device: Simultaneous Multiview Imaging From the Visible to the Near-Infrared", IEEE TRANSACTIONS ON INSTRUMENTATION AND MEASUREMENT, IEEE SERVICE CENTER, PISCATAWAY, NJ, US, vol. 63, no. 7, 1 July 2014 (2014-07-01), pages 1871 - 1873, XP011550207, ISSN: 0018-9456, [retrieved on 20140605], DOI: 10.1109/TIM.2014.2307992
- JEON DANIEL S. ET AL: "Multisampling Compressive Video Spectroscopy", COMPUTER GRAPHICS FORUM : JOURNAL OF THE EUROPEAN ASSOCIATION FOR COMPUTER GRAPHICS, vol. 35, no. 2, 1 May 2016 (2016-05-01), Oxford, pages 467 - 477, XP055811555, ISSN: 0167-7055, DOI: 10.1111/cgf.12847

## Beschreibung

Die Erfindung betrifft ein plenoptisches Abbildungssystem, insbesondere für eine Kamera, mit mehreren, in Richtung einer optischen Achse aufeinanderfolgend angeordneten Abbildungseinrichtungen, die eine erste Abbildungseinrichtung zur Erzeugung eines reellen Zwischenbildes von einem Objekt in einer Zwischenbildebene, eine zweite Abbildungseinrichtung zur Erzeugung mindestens eines virtuellen Spiegelbildes von dem reellen Zwischenbild, das in der Zwischenbildebene versetzt zu dem reellen Zwischenbild angeordnet ist, und eine dritte Abbildungseinrichtung zur gemeinsamen Abbildung des reellen Zwischenbildes und des virtuellen Spiegelbildes als reelles Bild auf einer in axialem Abstand zu der Zwischenbildebene anzuordnenden Bildempfängerfläche umfassen, wobei das Abbildungssystem eine Einrichtung zur optischen Filterung, mittels derer die Abbildung des reellen Zwischenbildes und/oder zumindest eines der virtuellen Spiegelbilder voneinander separat filterbar sind, aufweist.

Die Erfindung betrifft ferner ein Verfahren zur plenoptischen Abbildung, ein Computerprogrammprodukt zur Durchführung des Verfahrens und ein das Computerprogrammprodukt übertragendes Datenträgersignal.

Ein Abbildungssystem der eingangs genannten Art geht aus der Veröffentlichung MANAKOV ALKHAZUR ET AL, "A reconfigurable camera add-on for high dynamic range, multispectral, polarization, and light-field imaging" (ACM TRANSACTIONS ON GRAPHICS, US, (20130721), vol. 32, no. 4, doi:10.1 145/2461912.2461937, ISSN 0730-0301, pages 1 - 14) hervor. Sie beschreibt ein rekonfigurierbares Kamera-Add-On, das einen Filter aufweist und zur Erstellung von Lichtfeldabbildungen geeignet ist.

Die wissenschaftliche Veröffentlichung KAZEMZADEH FARNOUD ET AL, "Multispectral Stereoscopic Imaging Device: Simultaneous Multiview Imaging From the Visible to the Near-Infrared" (IEEE TRANSACTIONS ON INSTRUMENTATION AND MEASUREMENT, IEEE SERVICE CENTER, PISCATAWAY, NJ, US, vol. 63, no. 7, doi:10.1109/TIM.2014.2307992, ISSN 0018-9456, (20140701), pages 1871 - 1873) beschreibt ein weiteres Abbildungsgerät.

Ein weiteres Abbildungssystem geht aus der WO 2014/124982 A1 hervor. In Verbindung mit einer digitale Bilddaten erzeugenden Kamera erlaubt ein solches Abbildungssystem die Erzeugung von Bilddatensätzen, die neben zweidimensionaler Bildinformation auch die Tiefe von Bildpunkten im Objektraum betreffende Information beinhalten. Bei der elektronischen Bildwiedergabe mittels solcher Datensätze lässt sich die zusätzliche Tiefeninformation zum Beispiel dazu nutzen, das Bild für verschiedene Objektfeldtiefen scharf zu stellen.

Der Erfindung liegt die Aufgabe zugrunde, das plenoptische Abbildungssystem mit zusätzlichen Funktionen zu versehen.

Erfindungsgemäß wird diese Aufgabe dadurch gelöst, dass die Filtereinrichtung in der Zwischenbildebene oder in Richtung der optischen Achse unmittelbar vor oder hinter der Zwischenbildebene und/oder unmittelbar vor der Bildempfängerfläche angeordnet ist.

Mit dem erfindungsgemäßen plenoptischen Abbildungssystem wird es möglich, mit einer einzigen Aufnahme gleichzeitig unterschiedlich gefilterte und ggf. ungefilterte Abbildungen zu erzeugen und ggf. aufzunehmen und Informationen über die Bildtiefe zu erlangen.

Der Aufwand, um an die unterschiedlichen Abbildungen sowie an die Bildtiefeninformationen zu gelangen, verringert sich dadurch erheblich. Darüber hinaus wird die Möglichkeit geschaffen, die unterschiedlich gefilterten Abbildungen in kurzen zeitlichen Abständen zu erzeugen und ggf. aufzunehmen, so dass sogar derartige Videoaufnahmen erstellt werden können.

Als besonders vorteilhaft hat es sich erwiesen, die Informationen aus den unterschiedlich gefilterten Abbildungen mit den Informationen zur Bildtiefe zu verknüpfen. Auf diese Weise lassen sich mittels der Filterung auffindbare Eigenschaften von mit dem Abbildungssystem abgebildeten Objekten in Abhängigkeit von deren Abstand von dem Abbildungssystem ermitteln.

In einer Ausgestaltung der Erfindung umfasst das Abbildungssystem die Bildempfängerfläche und eine Einrichtung zur Verarbeitung eines mittels der Bildempfängerfläche aufgenommenen reellen Bildes. Zweckmäßigerweise weist die Bildempfängerfläche zumindest einen Bildaufnahmesensor auf oder ist durch zumindest einen Bildaufnahmesensor gebildet. In der bevorzugten Ausführungsform der Erfindung ist die Bildempfängerfläche durch einen einzigen Bildaufnahmesensor gebildet. Der Bildaufnahmesensor ist vorzugsweise ein CCD-Sensor oder ein CMOS-Sensor.

Die Einrichtung zur Verarbeitung des aufgenommenen Bilds ist zweckmäßigerweise durch eine Vorrichtung zur Datenverarbeitung, insbesondere einen Computer, gebildet, die insbesondere zur Verarbeitung von Daten, die aus dem Bildaufnahmesensor ausgelesen werden, eingerichtet ist. In einer Ausführungsform der Erfindung ist die Datenverarbeitungsvorrichtung in einem Gehäuse einer Kamera angeordnet, die vorzugsweise Teil des Abbildungssystems ist oder zur Verwendung mit dem Abbildungssystem eingerichtet ist.

In einer Ausgestaltung der Erfindung ist die Verarbeitungseinrichtung dazu vorgesehen, bezogen auf die Richtung der optischen Achse Positionen von Abschnitten des Objekts, die durch zumindest einzelne der Bildpunkte des Bildes abgebildet sind, aus dem Bild zu bestimmen. Vorteilhaft können auf diese Weise die genannten Informationen über die Bildtiefe erlangt werden. Die Positionsbestimmung ist vorzugsweise zumindest derart vorgesehen, dass die Positionen in Richtung der optischen Achse, insbesondere zumindest im Verhältnis zueinander, bestimmbar sind. Darüber hinaus wäre vorstellbar, die Verarbeitungseinrichtung vorzusehen derart, dass sich die Positionen als Abstände der Objektbereichspunkte von dem Abbildungssystem zum Zeitpunkt der Aufnahme ermitteln lassen.

Zweckmäßigerweise ist die Verarbeitungseinrichtung dazu vorgesehen, die Positionen zu bestimmen und dazu zu ermitteln, wie weit identische Abschnitte des Objekts, insbesondere identische Objektpunkte, in den Abbildungen des reellen Zwischenbilds und zumindest eines der virtuellen Zwischenbilder oder/und in den Abbildungen zumindest zweier verschiedener virtueller Spiegelbilder zueinander versetzt angeordnet dargestellt sind. Die versetzte Darstellung und damit die Unterschiedliche Wiedergabe der Objektabschnitte in den Abbildungen ergibt sich dadurch, dass die verschiedenen Abbildungen das Objekt aus unterschiedlichen Blickwinkeln darstellen und Abschnitte des Objekts wegen einer Parallaxe aufgrund der unterschiedlichen Blickwinkeln ihre Positionen relativ zueinander ändern.

Zweckmäßigerweise ist eine Halteeinrichtung vorgesehen, an der sich die Filtereinrichtung vor der Bildempfängerfläche lösbar anordnen lässt. Die Halteeinrichtung ist vorzugsweise an einem Objektivgehäuse oder/und an einem Kameragehäuse des Abbildungssystems gebildet. Vorzugsweise ist die Halteeinrichtung mit einer Einrichtung zur Verstellung, insbesondere Justierung, der Position der Filtereinrichtung in der Halteeinrichtung versehen. Die Verstellung dient dazu, die Positionen der Filter so anzuordnen, dass jeweilig genau die Strahlen, die die verschiedenen Abbildungen bilden, durch sie hindurchtreten. Die Halteeinrichtung kann mit zumindest einem Justiermittel, bspw. einer Stellschraube o. dgl., versehen sein, mittels dessen sich die Position der Filtereinrichtung oder zumindest einzelner der Filter innerhalb der Filtereinrichtung verändern lässt. Das Justiermittel kann zur Verstellung in Richtung genannten optischen Achse, senkrecht zur optischen Achse oder/und zur Rotation, bspw. um die optische Achse oder in Richtung senkrecht zur optischen Achse, vorgesehen sein.

In einer weiteren Ausgestaltung der Erfindung ist die Filtereinrichtung in dem Abbildungssystem in einer Position angeordnet, in welcher die Abbildung des reellen Zwischenbildes und der virtuellen Spiegelbilder räumlich voneinander getrennt sind und sich insbesondere nicht überlagern.

In einer Ausführungsform der Erfindung ist die Filtereinrichtung in der ersten Abbildungseinrichtung angeordnet oder ist Teil der ersten Abbildungseinrichtung.

Zweckmäßigerweise weist die Filtereinrichtung zumindest zwei optische Filter auf. Vorzugsweise unterscheiden sich zumindest zwei der optischen Filter in ihren Filtereigenschaften. Die Filtereinrichtung kann zumindest einen der nachfolgenden Filter umfassen: Polarisationsfilter, UV-Sperrfilter, Farbfilter, Infrarot-Sperrfilter, Neutraldichtefilter, Kantenfilter, Interferenzfilter, Bayer-Filter, Komplementärfarbenfilter und/oder Fluoreszenzfilter. Die optischen Filter können sich, auch wenn mehrere Filter derselben Art verwendet werden, durch die jeweiligen Filtereigenschaften unterscheiden. Z.B. können sich Polarisationsfilter durch ihre Orientierungen, Interferenzfilter durch die jeweiligen wellenlängenabhängigen Transmissionsgrade, die Kantenfilter durch die jeweilige Trennung der Spektralbereiche, die Neutraldichtefilter durch ihre Neutraldichten und/oder die Komplementärfarbenfilter durch die jeweilig farbspezifischen wellenlängenabhängige Durchlässigkeit unterscheiden.

Insbesondere bei Verwendung unterschiedlicher Neutraldichtefilter, die vorzugsweise voneinander abweichende Neutraldichten aufweisen, wird es möglich, mit einer einzigen Aufnahme eine HDR-Abbildung (High Dynamic Range) zu erstellen. Insbesondere lassen sich auch Videos in HDR erstellen.

Ferner wird es möglich, unter Verarbeitung der unterschiedlich gefilterten Abbildungen zumindest eine Filterwirkung nachzubilden, insbesondere zu errechnen, bspw. durch Interpolation von Abbildungen, die mit unterschiedlichen Filtern aufgenommen worden sind. Beispielsweise lässt sich eine orange gefilterte Abbildung aus einer rot und einer grün gefilterten Abbildung erstellen.

In einer besonders bevorzugten Ausführungsform der Erfindung weist die Filtereinrichtung einen Träger, vorzugsweise einen Trägerrahmen, auf, in dem die optischen Filter, vorzugsweise lösbar, in verschiedenen Filterpositionen angeordnet sind. Der Träger könnte durch zwei transparente Glasplatten gebildet sein, zwischen denen die Filter angeordnet sind. Ferner wäre vorstellbar, den Träger durch einen Kunststoffrahmen zu bilden, an dem in den Filterpositionen Einsatzplätze für die Filter vorgesehen sind.

Zweckmäßigerweise weist die Filtereinrichtung N x N, vorzugsweise 3 x 3, 5 x 5 oder 7 x 7, Filterpositionen in einer Matrixanordnung auf. Die Matrixanordnung erstreckt sich bei Anordnung in dem Abbildungssystem vorzugsweise in Richtung senkrecht zu dessen optischer Achse.

Es versteht sich, dass zumindest eine Filterposition in der Filtereinrichtung frei von Filtern bleiben kann, um ungefilterte Abbildungen des reellen Zwischenbildes oder/und zumindest eines der Spiegelbilder zu erlangen.

In einer besonders bevorzugten Ausführungsform der Erfindung weisen zumindest zwei der optischen Filter dieselben Filtereigenschaften auf. Vorteilhaft lässt sich dann besonders einfach anhand der identisch gefilterten Abbildungen die genannte Position in Richtung der optischen Achse bestimmen und so an Informationen über die Bildtiefe gelangen.

Analog können zumindest zwei der Filterpositionen frei bleiben und anhand der ungefilterten Abbildungen die Informationen über die Bildtiefe ermittelt werden.

In einer besonders bevorzugten Ausführungsform der Erfindung sind die zumindest zwei optischen Filter, die dieselben Filtereigenschaften aufweisen, in äußeren Filterpositionen der Matrixanordnung angeordnet oder/und es bleiben zumindest zwei der äußeren Filterpositionen frei. Besonders bevorzugt sind die optischen Filter mit identischen Filtereigenschaften in einander, insbesondere diagonal, gegenüberliegenden äußeren Filterpositionen angeordnet und/oder die genannten äußeren Filterpositionen bleiben frei von Filtern. Vorteilhaft lässt sich die Information über die Bildtiefe bei einer derartigen Anordnung aus den jeweilig gleichartig gefilterten oder ungefilterten Abbildungen der äußeren Filterpositionen besonders gut bestimmen, da aufgrund der weiter voneinander abweichenden Blickwinkel in den Abbildungen eine größere Parallaxe besteht.

In einer weiteren Ausgestaltung der Erfindung ist die genannte Verarbeitungseinrichtung dazu vorgesehen, die genannte Position in Richtung der optischen Achsen aus unterschiedlich gefilterten Abbildungen in dem Bild zu bestimmen. Die Verarbeitungseinrichtung kann dazu vorgesehen sein, bspw. mittels eines Vergleichs von Intensitäten, Farben und/oder Helligkeiten und ggf. erkennbaren abgebildeten Konturen, Bildpunkte der verschiedenen Abbildungen einander zuzuordnen und wie oben erläutert die Position zu ermitteln.

In einer besonders bevorzugten Ausführungsform der Erfindung ist die Verarbeitungseinrichtung dazu vorgesehen, Informationen zu den jeweiligen Bildpunkten aus den verschiedenen Abbildungen, bspw. Farbe, Intensität und/oder Helligkeit, mit den Positionen in Richtung der optischen Achse der jeweiligen Bildpunkte miteinander zu verknüpfen. Vorteilhaft wird dadurch die Möglichkeit geschaffen, Informationen, die sich durch die, ggf. unterschiedlichen, Filterungen ermitteln lassen, den Positionen zuzuordnen, insbesondere vom Abstand vom Abbildungssystem darzustellen.

Zweckmäßigerweise ist die Filtereinrichtung, insbesondere der genannte Träger, mit einer, vorzugsweise automatisch lesbaren, Kennzeichnung versehen. Die Kennzeichnung kann Informationen über die Eigenschaften der Filter und der jeweiligen Filterpositionen enthalten oder/und einen Code enthalten, anhand dessen sich die Informationen aus einer Datenbank, ggf. über das Internet, abrufen lassen.

Die Kennzeichnung kann durch einen optisch lesbaren Code, vorzugsweise einen Barcode, einen 2D-Code, einen QR-Code o. dgl., oder durch eine mechanische Codierung, die z.B. an dem genannten Trägerrahmen vorgesehen sein könnte, gebildet sein.

Ferner wäre vorstellbar, die Kennzeichnung an der Filtereinrichtung vorzusehen derart, dass eine Kennung optisch auf dem reellen Bild erscheint, wenn mittels der Abbildungseinrichtung eine Aufnahme erstellt wird. Die Kennzeichnung könnte an zumindest einem der Filter gebildet sein oder durch ein mit der Kennung versehenes geeignetes optisches Element gebildet sein, das in eine der Filterpositionen gesetzt wird.

Das Abbildungssystem weist zweckmäßigerweise eine Einrichtung zum Lesen der Kennzeichnung auf. Die Verarbeitungseinrichtung kann dazu vorgesehen sein, die Informationen über die Eigenschaften der Filter und der jeweiligen Filterpositionen aus der Datenbank abzurufen und/oder bei der Verarbeitung des reellen Bildes zu verarbeiten.

In einer weiteren Ausgestaltung der Erfindung weist das Abbildungssystem eine Einrichtung zum automatischen Wechseln der optischen Filter auf. Das automatische Wechseln kann erfolgen, indem einzelne oder mehrere der optischen Filter und/oder der genannte Träger getauscht werden. Zum Tauschen der Filter könnte ein Filtermagazin vorgesehen sein, das mehrere unterschiedliche Filter enthält und aus dem die Filter für den Einsatz im Träger automatisch entnommen und zur Lagerung wieder eingesetzt werden können. Zum Tauschen des gesamten Trägers könnte ein Filterrad vorgesehen sein, das mehrere der, vorzugsweise unterschiedlich mit optischen Filtern bestückten, Räderrahmen hält und sich derart an dem Abbildungssystem positionieren lässt, dass jeweilig ein anderer Tragrahmen in dem Abbildungssystem wirkt.

In einer Ausgestaltung der Erfindung weist die zweite Abbildungseinrichtung zumindest einen Spiegel, vorzugsweise mehrere Spiegel, und/oder zumindest ein Prisma, vorzugsweise mehrere Prismen, zur Erzeugung der Abbildungen auf der Empfängerfläche auf. Der bzw. die Spiegel und/oder das Prisma bzw. die Prismen sind in der zweiten Abbildungseinrichtung derart angeordnet, dass auf der Empfängerfläche mehrere Abbildungen des Objektbereichs erzeugbar sind. Dazu sind im Prinzip diverse unterschiedliche Anordnungen von Spiegeln und/oder Prismen möglich. Als besonders vorteilhaft hat es sich erwiesen, die zweite Abbildungseinrichtung derart vorzusehen, dass mehrere Spiegel vorgesehen und derart angeordnet sind, dass die verschiedenen in einer Eintrittsöffnung eintreffenden Lichtstrahlen beim Durchgang durch die zweite Abbildungseinrichtung je nach Strahlengang ohne Reflexion durch die zweite Abbildungseinrichtung hindurchdringen oder an einer oder mehreren der Spiegelflächen, ggf. mehrfach, reflektiert werden, bevor sie die zweite Abbildungseinrichtung wieder verlassen.

In einer besonders bevorzugten Ausführungsform der Erfindung umfasst die zweite Abbildungseinrichtung ein Kaleidoskop. Ein solches Kaleidoskop umfasst zweckmäßigerweise zumindest ein Paar ebener Spiegelflächen, wobei die Spiegelflächen einander zugewandt und im Abstand voneinander angeordnet sind. Zumindest ein Teil, vorzugsweise sämtliche, Strahlengänge verlaufen durch den Raum zwischen den Spiegelflächen. Vorzugsweise sind Spiegelflächen parallel zueinander angeordnet. Das Kaleidoskop kann zwei oder mehrere Spiegelpaare aufweisen. Aus den Spiegelpaaren kann ein Rohr gebildet sein, das im Querschnitt polygonal, vorzugsweise rechteckig, ist. Das Kaleidoskop könnte alternativ durch einen zylindrischen, im Querschnitt polygonalen Glasstab gebildet sein, der Seitenflächen und verspiegelte Stirnflächen zum Ein- und Austritt der Lichtstrahlen aufweist. Der Glasstab weist im Querschnitt vorzugsweise die Form eines gleichschenkligen Dreiecks, eines Rechtecks, insbesondere Quadrats, eines regelmäßigen Fünf-, Sechs-, Sieben- oder Achtecks auf.

Zweckmäßigerweise sind die Spiegel und/oder Prismen derart vorgesehen, dass die verschiedenen Abbildungen den Objektbereich von unterschiedlichen Blickwinkeln aus aufgenommen darstellen.

In einer bevorzugten Ausführungsform der Erfindung umfasst die erste Abbildungseinrichtung zumindest eine Lichteintrittslinse, vorzugsweise mehrere Lichteintrittslinsen. Die zweite Abbildungseinrichtung ist zweckmäßigerweise derart gebildet, dass die in die zweite Abbildungseinrichtung eintretenden Lichtstrahlen entsprechend ihrer Richtung derart aufgespaltet werden, dass sie den Objektbereich aus geringfügig unterschiedlichen Blickwinkeln erfassen, aber dennoch denselben Objektbereich darstellen.

Die erste Abbildungseinrichtung ist zweckmäßigerweise vorgesehen derart, dass sie den Objektbereich auf der Zwischenbildebene an einem der erste Abbildungseinrichtung zugewandten Ende der zweiten Abbildungseinrichtung abbildet.

Zweckmäßigerweise ist das Lichtaustrittslinsensystem gebildet derart, dass seine Schärfeebene mit der Eingangsebene der zweiten Abbildungseinrichtung, insbesondere des Kaleidoskops, identisch ist.

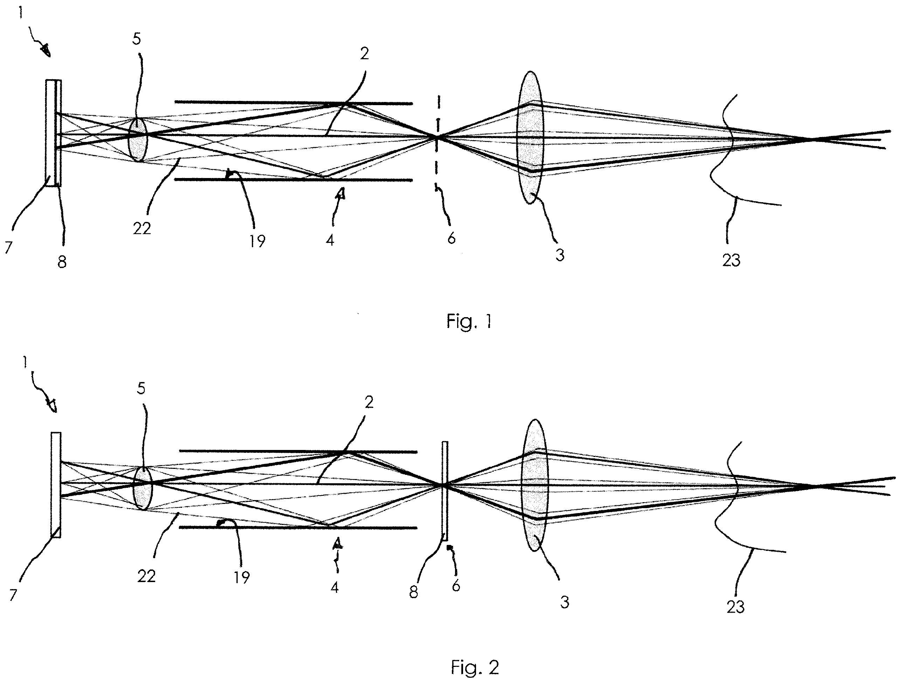

Ausführungsformen der Abbildungseinrichtungen sind in der WO 2014/124982 A1 beschrieben. Der Inhalt der WO 2014/124982 A1 wird in die vorliegende Anmeldung durch Bezugnahme aufgenommen. Im Einzelnen wird auf den Text auf. S. 7, 1. Absatz bis S. 11, 2. Absatz und die Fig. 1 bis 3 Bezug genommen. Dort sind geeignete Abbildungseinrichtungen beschrieben und ihre Funktionsweise erläutert.

In einer Ausführungsform der Erfindung ist die zweite Abbildungseinrichtung auf einer Seite der ersten Abbildungseinrichtung angeordnet, die der Bildempfängerfläche zugewandt ist.

Zweckmäßigerweise sind die erste, die zweite und die dritte Abbildungseinrichtung in Richtung der optischen Achse hintereinander angeordnet, wobei die zweite Abbildungseinrichtung vorzugsweise zwischen der ersten und der dritten Abbildungseinrichtung angeordnet ist.

In einer weiteren Ausgestaltung der Erfindung ist das Abbildungssystem, insbesondere die Abbildungseinrichtungen, derart vorgesehen, dass ein mittels des Abbildungssystems abbildbarer Objektraum in Richtung der optischen Achse hin zur Bildempfängerfläche gesehen vor der ersten Abbildungseinrichtung angeordnet ist. Insbesondere ist das Abbildungssystem, insbesondere die Abbildungseinrichtungen, derart vorgesehen, dass der abbildbare Objektraum auf der Seite der ersten Abbildungseinrichtung angeordnet, die von der zweiten Abbildungseinrichtung abgewandt ist.

In einer besonders bevorzugten Ausführungsform der Erfindung bildet das Abbildungssystem ein Objektiv für eine Kamera. Das Objektiv umfasst zweckmäßigerweise ein Gehäuse, in dem das Abbildungssystem angeordnet ist. Das Objektiv ist vorzugsweise mit einer Einrichtung zur mechanischen Befestigung an einem Kameragehäuse, bspw. einem Objektivgewinde oder einem Objektivbajonett, versehen. Es kann ferner mit einer Einrichtung zur elektrischen oder elektronischen Verbindung und/oder zur Datenübertragung mit dem Kameragehäuse versehen sein.

Wie eingangs erwähnt betrifft die Erfindung ein Verfahren zur plenoptischen Abbildung eines Objektbereichs, insbesondere mittels einer Kamera, bei dem ein Objektbereich mit mehreren, in Richtung einer optischen Achse aufeinanderfolgend angeordneten Abbildungseinrichtungen abgebildet wird, wobei die Abbildungseinrichtungen eine erste Abbildungseinrichtung zur Erzeugung eines reellen Zwischenbildes von einem Objekt in einer Zwischenbildebene, eine zweite Abbildungseinrichtung zur Erzeugung mindestens eines virtuellen Spiegelbildes von dem reellen Zwischenbild, das in der Zwischenbildebene versetzt zu dem reellen Zwischenbild angeordnet ist, und eine dritte Abbildungseinrichtung zur gemeinsamen Abbildung des reellen Zwischenbildes und des virtuellen Spiegelbildes als reelles Bild auf einer in axialem Abstand zu der Zwischenbildebene anzuordnenden Bildempfängerfläche umfassen. Das Verfahren ist dadurch gekennzeichnet, dass die Abbildung des reellen Zwischenbildes und/oder zumindest eines der virtuellen Spiegelbilder voneinander separat gefiltert werden. Zweckmäßigerweise werden die Positionen in Richtung der optischen Achse von Objektbereichspunkten, die durch zumindest einzelne der Bildpunkte des Bildes abgebildet sind, bestimmt.

In einer Ausführungsform der Erfindung werden die Positionen dadurch bestimmt, dass ermittelt wird, wie weit identische Abschnitte des Objekts, insbesondere identische Objektpunkte, in den Abbildungen des reellen Zwischenbilds und zumindest eines der virtuellen Zwischenbilder oder/und in den Abbildungen zumindest zweier verschiedener virtueller Spiegelbilder zueinander versetzt angeordnet dargestellt sind.

In einer besonders bevorzugten Ausführungsform der Erfindung werden die Positionen lediglich aus Abbildungen in dem reellen Bild ermittelt, die ungefiltert sind oder mit optischen Filtern, die identische Filtereigenschaften aufweisen, gefiltert werden. Alternativ oder ergänzend dazu werden die Positionen aus Abbildungen in dem reellen Bild ermittelt, die mit optischen Filtern gefiltert werden, die unterschiedliche Filtereigenschaften aufweisen.

In einer Ausgestaltung der Erfindung werden in den verschiedenen Abbildungen zumindest einzelne der Bildpunkte mit Punkten im Objektbereich, die sie abbilden, verknüpft und anhand der Verknüpfungen die Positionen Punkten im Objektbereich in Richtung der optischen Achse zumindest im Verhältnis zueinander ermittelt werden. Das Verknüpfen kann eine Bildanalyse der verschiedenen Abbildungen umfassen, bei der die verschiedenen Bildpunkte den jeweiligen Punkten im Objektbereich, die sie abbilden, zugeordnet werden.

Die Erfindung betrifft ferner ein Verfahren zur Verarbeitung des aufgenommenen reellen Bildes. Bei dem Verarbeitungsverfahren werden die separat gefilterte Abbildung des reellen Zwischenbildes und/oder zumindest eines der virtuellen Spiegelbilder in Abhängigkeit von der jeweiligen Filterung verarbeitet und/oder Positionen in Richtung der optischen Achse von durch zumindest einzelne der Bildpunkte des Bildes abgebildeten Objektbereichspunkten aus dem Bild bestimmt.

Zweckmäßigerweise werden die Positionen dadurch bestimmt, dass ermittelt wird, wie weit identische Abschnitte des Objekts, insbesondere identische Objektpunkte, in den Abbildungen des reellen Zwischenbilds und zumindest eines der virtuellen Zwischenbilder oder/und in den Abbildungen zumindest zweier verschiedener virtueller Spiegelbilder zueinander versetzt angeordnet dargestellt sind.

In einer Ausführungsform des Verarbeitungsverfahrens wird unter Verarbeitung der unterschiedlich gefilterten Abbildungen eine Filterwirkung nachgebildet, insbesondere errechnet, z.B. durch Interpolation.

Die Erfindung betrifft ferner ein Computerprogrammprodukt, umfassend Befehle, die bei der Ausführung des Programms durch einen Computer diesen veranlassen, zumindest einzelne Schritte des Verfahrens zur plenoptischen Abbildung eines Objektbereichs und/oder des Verfahrens zur Verarbeitung reellen Bildes durchzuführen.

Insbesondere umfasst das Computerprogrammprodukt Befehle, die bei der Ausführung des Programms durch einen Computer diesen veranlassen, zumindest einen der nachfolgend genannten Verfahrensschritte durchzuführen:
- mittels der Abbildungseinrichtung und/oder unter Durchführung des Abbildungsverfahrens das reelle Bild erzeugen,
- die separat gefilterte Abbildung bzw. Abbildungen des reellen Zwischenbildes und/oder zumindest eines der virtuellen Spiegelbilder in Abhängigkeit von der jeweiligen Filterung verarbeiten,
- aus den separat gefilterten Abbildungen des reellen Zwischenbildes und/oder zumindest eines der virtuellen Spiegelbilder Positionen in Richtung der optischen Achse von durch zumindest einzelne der Bildpunkte abgebildeten Objektbereichspunkten bestimmen, ggf. aus unterschiedlich gefilterten Abbildungen,
- aus den separat gefilterten Abbildungen des reellen Zwischenbildes und/oder zumindest eines der virtuellen Spiegelbilder Positionen in Richtung der optischen Achse von Objektbereichspunkten, die durch zumindest einzelne der Bildpunkte abgebildet sind, bestimmen, wobei die Positionen in einem Objektraum sind, der in Richtung der optischen Achse hin zur Bildempfängerfläche gesehen vor der ersten Abbildungseinrichtung angeordnet ist und/oder auf der Seite der ersten Abbildungseinrichtung angeordnet ist, die von der zweiten Abbildungseinrichtung abgewandt ist.

Zweckmäßigerweise ist das Computerprogrammprodukt zur Aufnahme des reellen Bildes dazu eingerichtet, die Bilderzeugung automatisch zu veranlassen, wobei der Computer, auf dem das Programm läuft, eingerichtet ist derart, dass er, vorzugsweise aufgrund einer elektrischen oder/und elektronischen Verbindung mit dem Abbildungssystem oder aufgrund einer Implementierung in das Abbildungssystem, die Aufnahme veranlassen kann.

Zur Bestimmung der genannten Position ist das Computerprogrammprodukt in einer Ausführungsform der Erfindung dazu eingerichtet, zu ermitteln, wie weit identische Abschnitte des Objekts, insbesondere identische Objektpunkte, in den Abbildungen des reellen Zwischenbilds und zumindest eines der virtuellen Zwischenbilder oder/und in den Abbildungen zumindest zweier verschiedener virtueller Spiegelbilder zueinander versetzt angeordnet dargestellt sind.

In einer Ausgestaltung der Erfindung ist das Computerprogrammprodukt zur Verarbeitung der separat gefilterten Abbildung dazu vorgesehen, den Abbildungen des reellen Zwischenbildes und des mindestens einen virtuellen Spiegelbildes eine Information zu dem für die Abbildung jeweilig verwendeten Filter zuzuordnen. Das Computerprogramm kann dazu eingerichtet sein, die Information wie oben erläutert automatisch aus einer Datenbank, ggf. über das Internet, abzurufen.

Zweckmäßigerweise kann das Computerprogrammprodukt direkt in den internen Speicher eines digitalen Computers geladen werden und umfasst Softwareabschnitte, den die Verfahrensschritte durchgeführt werden können, wenn das Computerprogrammprodukt auf einem Computer, insbesondere einem Computer des Abbildungssystems, abläuft.

Zweckmäßigerweise ist das Computerprogrammprodukt ein auf einem Datenträger, vorzugsweise RAM, ROM, CD oder dergleichen, oder einem Gerät, insbesondere einem Personalcomputer, einem Gerät mit eingebettetem Prozessor, einem in ein Gerät eingebettetem Computer, einem Smartphone, einem Computer einer Vorrichtung zur Erstellung einer Bildaufzeichnung, insbesondere einer Foto- und/oder Videokamera, gespeichertes Computerprogramm ist oder eine für die Übersendung über ein Rechnernetzwerk, insbesondere das Internet, geeignete, Daten darstellende Signalfolge.

Die Erfindung betrifft ferner eine Vorrichtung zur Datenverarbeitung, die Mittel zur Durchführung des Verfahrens umfasst. Die Datenverarbeitungsvorrichtung ist vorzugsweise durch einen Computer gebildet.

In einer Ausführungsform der Erfindung ist die Vorrichtung Teil des genannten Abbildungssystems. Zweckmäßigerweise ist die Vorrichtung Teil einer Kamera, insbesondere einer Foto- und/oder Videokamera, die das Abbildungssystem umfasst und/oder zur Bestückung mit dem Abbildungssystem eingerichtet ist.

In einer besonders bevorzugten Ausführungsform der Erfindung ist die Datenverarbeitungsvorrichtung zum Betrieb der Kamera, insbesondere Foto- und/oder Videokamera, bei der Erstellung einer Bildaufzeichnung mittels der Kamera vorgesehen.

Zweckmäßigerweise ist die Datenverarbeitungsvorrichtung Teil des Abbildungssystems, insbesondere der Kamera, und ist dort bspw. durch einen Prozessor und einen Speicher, auf den der Prozessor zugreifen kann, gebildet.

Die Erfindung betrifft ferner eine Kamera, insbesondere Foto- und/oder Videokamera, die das Abbildungssystem und die genannte Datenverarbeitungsvorrichtung umfasst.

Die Erfindung wird nachfolgend anhand von Ausführungsbeispielen und den beigefügten Zeichnungen, die sich auf die Ausführungsbeispiele beziehen, näher erläutert. Es zeigen:
- Fig. 1: ein erfindungsgemäßes Abbildungssystem,
- Fig. 2: ein weiteres erfindungsgemäßes Abbildungssystem,
- Fig. 3: einen Strahlengang eines der Abbildungssysteme nach Fig. 1 oder 2,
- Fig. 4: weitere Strahlengänge eines der Abbildungssysteme nach Fig. 1 oder 2,
- Fig. 5: eine Filtereinrichtung eines der Abbildungssysteme nach Fig. 1 oder 2,
- Fig. 6: schematisch eine mit dem Abbildungssystem versehene Kamera, und
- Fig. 7: ein mittels des erfindungsgemäßen Abbildungssystems aufgenommenes Bild.

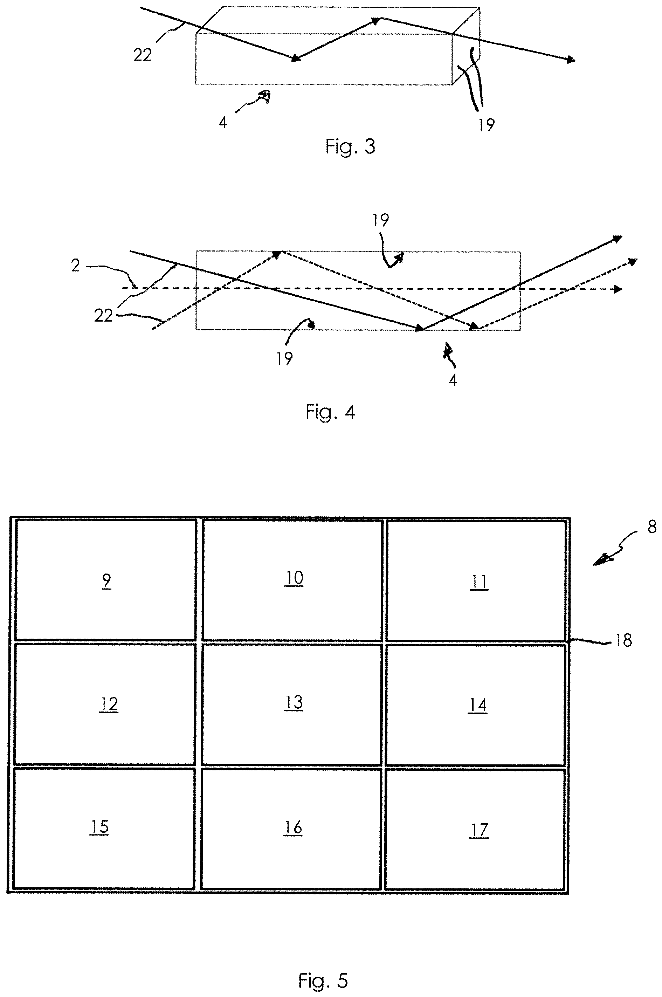

In Fig. 1 ist schematisch dargestellt, wie in erfindungsgemäßer Weise eine plenoptische Bildaufnahme unter Verwendung eines Abbildungssystems 1 erstellt wird. Das Abbildungssystem 1 weist neben einer Eintrittslinsengruppe 3 und einer Austrittslinsengruppe 5 einen Spiegelkasten 4 mit Spiegeln 19 auf, welche wie Fig. 3 zeigt, in dem Spiegelkasten 4 im Querschnitt rechteckig angeordnet sind. Der Spiegelkasten 4 bildet ein Kaleidoskop. Lichtstrahlen 22, die von einem Objektbereich, der einen Gegenstand 23 abbildet, ausgehen, treten in die Eintrittslinsengruppe 3 ein und werden durch die Eintrittslinsengruppe 3 ins Innere eines Spiegelkastens 4 gelenkt. Einige der Lichtstrahlen 22 gelangen durch den Spiegelkasten 4 hindurch bis auf die Austrittslinsengruppe 5, ohne auf einen der Spiegel 19 zu treffen, andere Lichtstrahlen werden lediglich ein einziges Mal an einem der Spiegel 19 gespiegelt, bevor sie auf die Austrittslinsengruppe 5 treffen. Weitere Lichtstrahlen wiederum werden innerhalb des Spiegelkastens 4 an den Spiegeln 19 mehrfach reflektiert, wobei die Reflexion sowohl an gegenüberliegenden als auch an benachbart zueinander angeordneten Spiegeln 19 erfolgen kann (vgl. Fig. 3 und 4). Die Austrittslinsengruppe 5 ist derart angeordnet, dass die aus dem Spiegelkasten 4 austretenden Lichtstrahlen 22 auf eine Empfängerfläche 7, die durch einen Sensor, insbesondere einen CCD- oder CMOS-Sensor gebildet ist, geleitet werden.

Die Eintrittslinsengruppe 3, der Spiegelkasten 4 sowie dessen Spiegel 19, und die Austrittslinsengruppe 5 sind derart angeordnet, dass auf der Empfängerfläche 7 neun Abbildungen des Objektbereichs gebildet werden, die in einem 3 x 3 - Raster nebeneinander erzeugt werden. Die Abbildungen werden derart erzeugt, dass sie den Objektbereich ausgehend von der Eintrittslinsengruppe 4 aus neun verschiedenen Blickwinkeln abbilden.

Das Abbildungssystem 1 ist mit einer Filtereinrichtung 8 versehen, die, wie Fig. 1 und 2 zeigen, im Abbildungssystem 1 an verschiedenen Positionen angeordnet sein kann. Fig. 1 zeigt eine Anordnung der Filtereinrichtung 8 unmittelbar vor der Empfängerfläche 7. Bei der Anordnung nach Fig. 2 ist die Filtereinrichtung 8 in der Zwischenbildebene angeordnet.

Die Filtereinrichtung 8 kann als Träger zwei Glasplatten umfassen, zwischen denen Filter angeordnet sind. Ferner kann als Träger ein Kunststoffrahmen vorgesehen sein.

Fig. 5 zeigt, dass die Filtereinrichtung 8 einen Träger 18 mit neun Filterpositionen 9 - 17 zur Aufnahme von optischen Filtern aufweist, die je nach Bedarf unbesetzt bleiben können oder mit, ggf. unterschiedlichen, optischen Filtern besetzt werden können. Jede der Filterpositionen 9 - 17 ist so angeordnet, dass jeweils solche Lichtstrahlen, die je eine der verschiedenen Abbildungen auf dem oben erläuterten 3 x 3-Raster bilden, durch sie hindurch verlaufen.

Dadurch wird die Möglichkeit geschaffen, mit einer einzigen Aufnahme gleichzeitig ungefilterte und gefilterte und/oder unterschiedlich gefilterte Abbildungen des Objektbereichs in einem reellen Bild zu erstellen, das auf die Empfängerfläche 7 trifft. Darüber hinaus wird es aufgrund der verschiedenen Blickwinkel, aus denen die einzelnen Abbildungen aufgenommen werden, möglich, Informationen über Positionen in Richtung der optischen Achse von Punkten des Objektbereichs, die durch die einzelnen Bildpunkte des Bildes wiedergegeben sind, zu bestimmen, so dass sich eine Aussage über die Positionen der abgebildeten Objektbereichspunkte relativ zueinander in Bezug auf die optische Achse treffen lassen. Es können also Informationen über die Bildtiefe erlangt werden.

Die Informationen über die genannten Positionen lassen sich vergleichsweise einfach aus Abbildungen ermitteln, die in gleicher Weise gefiltert sind oder ungefiltert sind. Deshalb werden in einer Variante der Erfindung zur Positionsermittlung zumindest zwei der Filterpositionen 9 - 17 mit Filtern identischer optischer Eigenschaften besetzt oder zumindest zwei der Filterpositionen frei gelassen und die Positionen anhand der Abbildungen, die gleich oder ungefiltert sind, bestimmt.

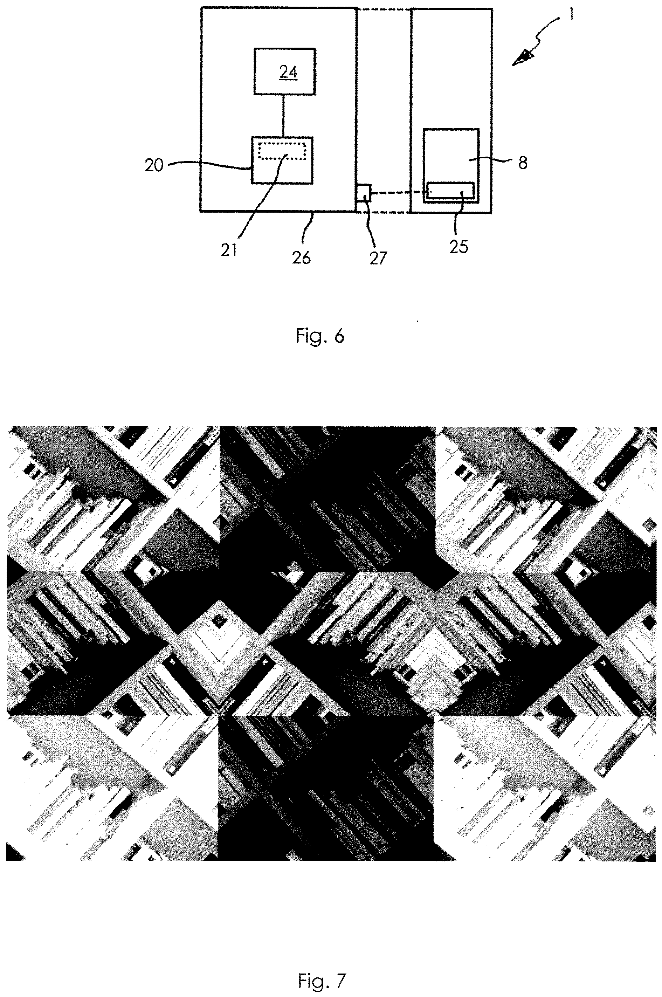

Die Abbildungseinrichtung 1 kann einen Computer 20 umfassen, der zum Auslesen des die Bildempfängerfläche 7 bildenden Sensors und zum Speichern der ausgelesenen Daten geeignet ist. Der Computer 20 kann z.B. an einem das Abbildungssystem 1 tragenden Objektiv oder, wie Fig. 6 schematisch zeigt, die an einem Kameragehäuse 26 angeordnet sein, das mit dem Abbildungssystem 1 zusammenwirkt. Ein Computer 20 oder eine andere Datenverarbeitungseinrichtung, an die die gespeicherten Daten, ggf. mittels des Computers 20, übertragen werden, ist mittels eines darauf laufenden Computerprogramms 21 dazu eingerichtet, die unterschiedlich gefilterten Abbildungen aus dem gespeicherten Bild zu verarbeiten. Das Computerprogramm 21 ist zu diesem Zweck derart vorgesehen, dass sich jeder der Abbildungen eine jeweilige Filtereigenschaft zuordnen lässt, die dem Filter entspricht, der in der Filtereinrichtung die jeweilige Abbildung gefiltert hat. In dem Computerprogramm 21 können dazu verschiedene Daten oder Datensätze, die zu Filtern, die für die Filtereinrichtung 8 vorgesehen sind, passen, in einer Datenbank 24 abrufbar gespeichert sein, so dass das Computerprogramm 21 bei geeigneter Einstellung automatisch auf die jeweilig passenden Daten oder Datensätze zugreifen kann.

Lassen sich die Filter an einem Tragrahmen 18 der Filtereinrichtung 8, z.B. manuell, austauschen, können mittels des Computerprogramms 21 entsprechend der gewählten Anordnung die passenden Datensätze für die jeweiligen Filterpositionen ausgewählt werden. Im Anschluss kann das Computerprogramm 21 automatisch die Bildaufzeichnung anhand der Datensätze, die die optischen Filter betreffen, auswerten.

Ferner könnten eine oder mehrere vorgefertigte Filtereinrichtungen 8 vorgesehen sein, in denen die unterschiedlichen Filter fest platziert sind. Solche Filtereinrichtungen 8 können mit einer in Fig. 6 schematisch gezeigten Kennzeichnung 25 versehen sein, anhand derer sich auslesen lässt, mit welchen Filtern, die Filterpositionen besetzt sind. Vorgesehen sein kann, dass das Computerprogramm 21 anhand der Kennzeichnung automatisch einen geeigneten Datensatz aus der Datenbank abruft, um die Bildaufzeichnung zu verarbeiten. Das Auslesen der Kennzeichnung 25 der Filtereinrichtung 8 könnte automatisch erfolgen. Beispielsweise könnte an dem Trägerrahmen ein Code, bspw. ein Barcode, vorgesehen sein, der automatisch bei Durchführung einer Bildaufzeichnung mittels eines entsprechenden Lesegeräts 27, das an dem Kameragehäuse angeordnet sein kann, ausgelesen wird.

Alternativ wäre vorstellbar, den Code in dem Bild, z.B. in zumindest einer der Abbildungen, zu speichern, so dass er bei Analyse der Bildaufzeichnungsdaten durch das Computerprogramm 21 automatisch erkannt wird und Computer 20 anhand der erkannten Kennzeichnung den passenden Datensatz lädt.

Ferner könnte vorgesehen sein, dass die Kennzeichnung bei Aufnahme einer Bildaufzeichnung in einem Bereich der Empfängerfläche 7 gestrahlt wird, der nicht zur Erstellung der Bildaufnahme verwendet wird, aber beim Auslesen der Empfängerfläche 7 abrufbar ist.

In einem ersten Beispiel sind in der Filtereinrichtung 8 nach Fig. 5 die Filterpositionen 9, 11, 15, 17 und die zentrale Filterposition 13 frei von Filtern. Auf den verbleibenden Filterpositionen 10, 12, 14, 16 sind Neutraldichtefilter unterschiedlicher Neutraldichten angeordnet.

Auf einer Bildaufzeichnung können anhand der Abbildungen, die aus Strahlen entstehen, die durch die Filterpositionen in den Ecken und im Zentrum der Empfängerfläche 7 aufgenommen werden, zur Ermittlung der Bildtiefe die genannten Positionen bestimmt werden und ferner anhand der ungefilterten sowie der unterschiedlich gefilterten Abbildungen ein erhöhter Kontrast in der Aufzeichnung erreicht werden. Dafür kann eine geeignete Bildverarbeitung, die an sich bekannt ist und bei welcher der erhöhte Kontrast aus Aufnahmen mit unterschiedlicher Belichtung (sogenannte "Belichtungsreihen") ermittelt wird, verwendet werden.

Es versteht sich, dass alternativ bspw. lediglich zwei der Filterpositionen 9 - 17 frei von Filtern bleiben könnten und die verbleibenden Filterpositionen mit Filtern unterschiedlicher Neutraldichten besetzt werden könnten, um eine größere oder eine breitere Kontrastauflösung zu erreichen.

Ferner könnte vorgesehen sein, sämtliche der Filterpositionen 9 - 17 mit Neutraldichtefiltern zu versehen, aber abweichend von den vorherigen Beispielen zwei oder mehrere Filter derselben Neutraldichte vorgesehen werden und anhand der Abbildungen, die mit den Filtern derselben Neutraldichte erzeugt worden sind, die genannten Positionen ermittelt werden.

Aufgrund der größeren Parallaxe, die besteht, wenn die Blickwinkel, aus denen die Abbildungen erzeugt werden, möglichst weit auseinander liegen, ist es vorteilhaft, zwei oder mehrere der in der Filtereinrichtung 8 außen liegende Filterpositionen 9, 10, 11, 12, 14, 15, 16, 17 freizulassen oder mit Filtern derselben Neutraldichte zu versehen, um die Positionen zu bestimmen. Besonders gut geeignet sind die Filterpositionen 9, 11, 15, 17, die die Eckpositionen in der Filtereinrichtung 8 bilden.

In einem weiteren Ausführungsbeispiel sind für die Filtereinrichtung 8 anstatt der obengenannten Neutraldichtefilter optische Filter anderer Art vorgesehen, bspw. Polarisationsfilter, Farbfilter, Komplementärfarbenfilter oder Fluoreszenzfilter. In der Filtereinrichtung 8 können dann jeweilig solche Filter mit unterschiedlicher Filterstärke oder Filterwirkung vorgesehen sein und, wie oben für den Neutraldichtefilter beschrieben, durch die unterschiedlich gefilterten Abbildungen erhöhte Filterauflösungen erreicht werden und dabei ggf. an die Informationen über die genannten Positionen gelangt werden.

In einem weiteren Ausführungsbeispiel sind in der Filtereinrichtung optische Filter unterschiedlicher Art angeordnet. Beispielsweise könnten auf den Filterpositionen 9 - 11 unterschiedliche Neutraldichtefilter, auf den Filterpositionen 12 - 14 unterschiedliche UV-Filter und auf den Filterpositionen 15 - 17 unterschiedliche Farbfilter angeordnet werden. Auf diese Weise lassen sich nicht nur unterschiedliche Abstufungen derselben Filterwirkung, sondern unterschiedliche Filterwirkungen in einer einzigen Bildaufzeichnung aufnehmen.

In einer anderen Variante werden die Positionen aus zumindest zwei Abbildungen, die unterschiedlich optisch gefiltert sind, oder aus zumindest einer ungefilterten und zumindest einer gefilterten Abbildung ermittelt. Dazu wird vorzugsweise eine Bildanalyse der einzelnen oder zumindest zweier der Abbildungen durchgeführt, um aus den unterschiedlich gefilterten Abbildungen die Bildpunkte zu ermitteln, die dieselben Punkte oder Bereiche des abgebildeten Objekts im Objektbereich darstellen. Diese Information wird benötigt, um, wie oben erläutert, einen Versatz in der Darstellung, bestimmen zu können.

Fig. 7 zeigt beispielhaft Abbildungen eines Objektbereichs in der Form, in der sie bei einer Aufnahme mittels des Abbildungssystems 1 auf der Empfängerfläche 7 aufgenommen werden, das mit einer Filtereinrichtung 8 nach einem weiteren bestückt ist. In dem Ausführungsbeispiel sind die Filterpositionen 15 und 17 frei von Filtern und die anderen Filterpositionen sind mit Neutraldichtefiltern unterschiedlicher Neutraldichten bestückt. Die Abbildungen treffen wie oben erläutert in einem 3 x 3 - Raster auf der Empfängerfläche 7 auf.

## Patentansprüche

1. Plenoptisches Abbildungssystem (1), insbesondere für eine Kamera, mit mehreren, in Richtung einer optischen Achse (2) aufeinanderfolgend angeordneten Abbildungseinrichtungen (3 - 5), die eine erste Abbildungseinrichtung (3) zur Erzeugung eines reellen Zwischenbildes von einem Objekt in einer Zwischenbildebene, eine zweite Abbildungseinrichtung (4) zur Erzeugung mindestens eines virtuellen Spiegelbildes von dem reellen Zwischenbild, das in der Zwischenbildebene (6) versetzt zu dem reellen Zwischenbild angeordnet ist, und eine dritte Abbildungseinrichtung (5) zur gemeinsamen Abbildung des reellen Zwischenbildes und des virtuellen Spiegelbildes als reelles Bild auf einer in axialem Abstand zu der Zwischenbildebene (6) anzuordnenden Bildempfängerfläche (7) umfassen, wobei das Abbildungssystem eine Einrichtung (8) zur optischen Filterung umfasst, mittels derer die Abbildung des reellen Zwischenbildes und/oder zumindest eines der virtuellen Spiegelbilder voneinander separat filterbar sind,
**dadurch gekennzeichnet,**
**dass** die Filtereinrichtung (8) in der Zwischenbildebene (6) oder in Richtung der optischen Achse (2) unmittelbar vor oder hinter der Zwischenbildebene (6) und/oder unmittelbar vor der Bildempfängerfläche (7) angeordnet ist.

2. Abbildungssystem nach Anspruch 1,
**dadurch gekennzeichnet**,
das Abbildungssystem (1) eine Einrichtung (18) zur Verarbeitung eines mittels der Bildempfängerfläche (7) aufgenommenen reellen Bildes umfasst, die dazu vorgesehen ist, bezogen auf die Richtung der optischen Achse Positionen von Abschnitten des Objekts, die durch zumindest einzelne der Bildpunkte des Bildes abgebildet sind, aus dem Bild zu bestimmen.

3. Abbildungssystem nach Anspruch 2,
**dadurch gekennzeichnet,**
**dass** die Verarbeitungseinrichtung (18) dazu vorgesehen ist, die Positionen zu bestimmen und dazu zu ermitteln, wie weit identische Abschnitte des Objekts, vorzugsweise identische Objektpunkte, in den Abbildungen des reellen Zwischenbilds und zumindest eines der virtuellen Zwischenbilder oder/und in den Abbildungen zumindest zweier verschiedener virtueller Spiegelbilder zueinander versetzt angeordnet dargestellt sind.

4. Abbildungssystem nach einem der Ansprüche 1 bis 3,
**dadurch gekennzeichnet.**
**dass** die Filtereinrichtung (8) in der ersten Abbildungseinrichtung (3) angeordnet ist oder Teil der ersten Abbildungseinrichtung (3) ist.

5. Abbildungssystem nach einem der Ansprüche 1 bis 4,
**dadurch gekennzeichnet,**
**dass** die Filtereinrichtung (8) zumindest zwei optische Filter (9 - 17) aufweist und sich vorzugsweise zumindest zwei der optischen Filter (9 - 17) in ihren Filtereigenschaften unterscheiden.

6. Abbildungssystem nach einem der Ansprüche 1 bis 5,
**gekennzeichnet durch** eine Einrichtung zum Halten der Filtereinrichtung (8), wobei die Halteeinrichtung vorzugsweise eine Einrichtung zur Verstellung, insbesondere Justierung, der Position der Filtereinrichtung in der Halteeinrichtung aufweist.

7. Abbildungssystem nach einem der Ansprüche 1 bis 6,
**dadurch gekennzeichnet,**
**dass** die zweite Abbildungseinrichtung (4) zur Erzeugung der virtuellen Spiegelbilder zumindest einen Spiegel, vorzugsweise mehrere Spiegel, aufweist, wobei die zweite Abbildungseinrichtung (4) vorzugsweise ein Kaleidoskop bildet.

8. Verfahren zur plenoptischen Abbildung eines Objektbereichs, insbesondere mittels einer Kamera, bei dem ein Objektbereich mit mehreren, in Richtung einer optischen Achse (2) aufeinanderfolgend angeordneten Abbildungseinrichtungen (3 - 5) abgebildet wird, wobei die Abbildungseinrichtungen (3 - 5) eine erste Abbildungseinrichtung (3) zur Erzeugung eines reellen Zwischenbildes von einem Objekt in einer Zwischenbildebene, eine zweite Abbildungseinrichtung (4) zur Erzeugung mindestens eines virtuellen Spiegelbildes von dem reellen Zwischenbild, das in der Zwischenbildebene (6) versetzt zu dem reellen Zwischenbild angeordnet ist, und eine dritte Abbildungseinrichtung (5) zur gemeinsamen Abbildung des reellen Zwischenbildes und des virtuellen Spiegelbildes als reelles Bild auf einer in axialem Abstand zu der Zwischenbildebene (6) anzuordnenden Bildempfängerfläche (7) umfassen, wobei die Abbildung des reellen Zwischenbildes und/oder zumindest eines der virtuellen Spiegelbilder voneinander separat gefiltert werden,
**dadurch gekennzeichnet,**
**dass** in der Zwischenbildebene (6) oder in Richtung der optischen Achse (2) unmittelbar vor oder hinter der Zwischenbildebene (6) und/oder unmittelbar vor der Bildempfängerfläche (7) gefiltert wird.

9. Verfahren nach Anspruch 8,
**dadurch gekennzeichnet,**
**dass** Positionen in Richtung der optischen Achse von Objektbereichspunkten, die durch zumindest einzelne der Bildpunkte des Bildes abgebildet sind, bestimmt werden.

10. Verfahren nach Anspruch 8 oder 9,
**dadurch gekennzeichnet,**
**dass** in den verschiedenen Abbildungen zumindest einzelne der Bildpunkte mit Punkten im Objektbereich, die sie abbilden, verknüpft werden und anhand der Verknüpfungen die Positionen Punkten im Objektbereich in Richtung der optischen Achse (2) zumindest im Verhältnis zueinander ermittelt werden.

11. Computerprogrammprodukt, umfassend Befehle, die bei der Ausführung des Programms durch einen Computer diesen veranlassen, aus separat gefilterten Abbildungen des reellen Zwischenbildes und/oder zumindest eines der virtuellen Spiegelbilder, die mittels des Abbildungssystems nach den Ansprüchen 1 bis 7 oder des Verfahrens nach den Ansprüchen 8 bis 10 erzeugt worden sind, Positionen in Richtung der optischen Achse von Objektbereichspunkten, die durch zumindest einzelne der Bildpunkte abgebildet sind, zu bestimmen.

12. Computerprogrammprodukt, insbesondere nach Anspruch 11, umfassend Befehle, die bei der Ausführung des Programms durch einen Computer diesen veranlassen, mittels des Abbildungssystems nach den Ansprüchen 1 bis 7 oder des Verfahrens nach den Ansprüchen 8 bis 10 separat gefilterte Abbildungen des reellen Zwischenbildes und/oder zumindest eines der virtuellen Spiegelbilder in Abhängigkeit von der jeweiligen Filterung verarbeiten.

13. Datenträger oder Gerät auf dem das Computerprogrammprodukt nach den Ansprüchen 11 und 12 gespeichert ist.

14. Datenträgersignal, das das Computerprogrammprodukt nach einem der Ansprüche 11 bis 12 überträgt.

## Claims

1. Plenoptic imaging system (1), in particular for a camera, having multiple imaging devices (3 - 5) arranged in succession in the direction of an optical axis (2), which comprise a first imaging device (3) for generating a real intermediate image of an object in an intermediate image plane, a second imaging device (4) for generating at least one virtual mirror image of the real intermediate image, which is arranged offset to the real intermediate image in the intermediate image plane (6), and a third imaging device (5) for jointly imaging the real intermediate image and the virtual mirror image as a real image on an image receiver surface (7) to be arranged at an axial distance to the intermediate image plane (6), wherein the imaging system comprises a device (8) for optical filtering, by means of which the image of the real intermediate image and/or at least one of the virtual mirror images can be filtered separately from one another,
**characterized**
**in that** the filter device (8) is arranged in the intermediate image plane (6) or, in the direction of the optical axis (2), directly in front of or behind the intermediate image plane (6) and/or directly in front of the image receiver surface (7).

2. Imaging system according to Claim 1,
**characterized**
**in that** the imaging system (1) comprises a device (18) for processing a real image recorded by means of the image receiver surface (7), which is provided to determine, with respect to the direction of the optical axis, positions of sections of the object, which are imaged by at least some of the image points of the image, from the image.

3. Imaging system according to Claim 2,
**characterized**
**in that** the processing device (18) is provided to determine the positions and for this purpose to ascertain how far identical sections of the object, preferably identical object points, are represented arranged offset in relation to one another in the images of the real intermediate image and at least one of the virtual intermediate images and/or in the images of at least two different virtual mirror images.

4. Imaging system according to any of Claims 1 to 3,
**characterized**
**in that** the filter device (8) is arranged in the first imaging device (3) or is part of the first imaging device (3).

5. Imaging system according to any of Claims 1 to 4,
**characterized**
**in that** the filter device (8) includes at least two optical filters (9 - 17) and preferably at least two of the optical filters (9 - 17) differ in their filter properties.

6. Imaging system according to any of Claims 1 to 5,
**characterized by** a device for holding the filter device (8), wherein the holding device preferably includes a device for adjusting, in particular aligning, the position of the filter device in the holding device.

7. Imaging system according to any of Claims 1 to 6,
**characterized**
**in that** the second imaging device (4) includes at least one mirror, preferably multiple mirrors, for generating the virtual mirror images, wherein the second imaging device (4) preferably forms a kaleidoscope.

8. Method for plenoptic imaging of an object area, in particular by means of a camera, in which an object area is imaged using multiple imaging devices (3 - 5) arranged in succession in the direction of an optical axis (2), wherein the imaging devices (3 - 5) comprise a first imaging device (3) for generating a real intermediate image of an object in an intermediate image plane, a second imaging device (4) for generating at least one virtual mirror image of the real intermediate image, which is arranged offset to the real intermediate image in the intermediate image plane (6), and a third imaging device (5) for jointly imaging the real intermediate image and the virtual mirror image as a real image on an image receiver surface (7) to be arranged at an axial distance to the intermediate image plane (6), wherein the image of the real intermediate image and/or at least one of the virtual mirror images are filtered separately from one another,
**characterized**
**in that** filtering takes place in the intermediate image plane (6) or, in the direction of the optical axis (2), directly in front of or behind the intermediate image plane (6) and/or directly in front of the image receiver surface (7).

9. Method according to Claim 8,
**characterized**
**in that** positions are determined in the direction of the optical axis of object area points, which are imaged by at least some of the image points of the image.

10. Method according to Claim 8 or 9,
**characterized**
**in that**, in the various images, at least some of the image points are linked to points in the object area which they image and the positions of points in the object area in the direction of the optical axis (2) are ascertained at least in relation to one another on the basis of the linkages.

11. Computer program product comprising instructions which, upon the execution of the program by a computer, prompt the latter to determine positions in the direction of the optical axis of object area points from separately filtered images of the real intermediate image and/or at least one of the virtual mirror images, which have been generated by means of the imaging system according to Claims 1 to 7 or the method according to Claims 8 to 10, wherein the object area points are imaged by at least some of the image points.

12. Computer program product, in particular according to Claim 11, comprising instructions which, upon the execution of the program by a computer, prompt the latter to process separately filtered images of the real intermediate image and/or at least one of the virtual mirror images in dependence on the respective filtering by means of the imaging system according to Claims 1 to 7 or the method according to Claims 8 to 10.

13. Data carrier or device on which the computer program product according to Claims 11 and 12 is stored.

14. Data carrier signal which transmits the computer program product according to either of Claims 11 and 12.

## Revendications

1. Système d'imagerie plénoptique (1), en particulier pour une caméra, comprenant plusieurs dispositifs d'imagerie (3 - 5) disposés successivement dans la direction d'un axe optique (2), lesquels comprennent un premier dispositif d'imagerie (3) pour générer une image intermédiaire réelle d'un objet dans un plan d'image intermédiaire, un deuxième dispositif d'imagerie (4) pour générer au moins une image miroir virtuelle de l'image intermédiaire réelle, disposée dans le plan d'image intermédiaire (6) en étant décalée par rapport à l'image intermédiaire réelle, et un troisième dispositif d'imagerie (5) pour représenter conjointement l'image intermédiaire réelle et l'image miroir virtuelle comme une image réelle sur une surface de réception d'image (7) à disposer à une distance axiale du plan d'image intermédiaire (6), le système d'imagerie comprenant un dispositif de filtrage optique (8) permettant de filtrer séparément les représentations de l'image intermédiaire réelle et/ou de l'une au moins des images miroir virtuelles,
**caractérisé en ce que**
le dispositif de filtrage (8) est disposé dans le plan d'image intermédiaire (6) ou, en direction de l'axe optique (2), immédiatement devant ou derrière le plan d'image intermédiaire (6) et/ou directement devant la surface de réception d'image (7).

2. Système d'imagerie selon la revendication 1,
**caractérisé en ce que**
le système d'imagerie (1) comprend un dispositif (18) pour traiter une image réelle enregistrée au moyen de la surface de réception d'image (7), lequel est destiné à définir, par rapport à la direction de l'axe optique, les positions de sections de l'objet représentées par au moins quelques des points de l'image.

3. Système d'imagerie selon la revendication 2,
**caractérisé en ce que**
le dispositif de traitement (18) est destiné à définir les positions et, à cet effet, à déterminer le décalage entre les sections identiques de l'objet, de préférence entre les points identiques de l'objet, dans les représentations de l'image intermédiaire réelle et de l'une au moins des images intermédiaires virtuelles et/ou dans les représentations d'au moins deux images miroir virtuelles différentes.

4. Système d'imagerie selon l'une des revendications 1 à 3,
**caractérisé en ce que**
le dispositif de filtrage (8) est disposé dans le premier dispositif d'imagerie (3) ou fait partie du premier dispositif d'imagerie (3).

5. Système d'imagerie selon l'une des revendications 1 à 4,
**caractérisé en ce que**
le dispositif de filtrage (8) comprend au moins deux filtres optiques (9 - 17), et de préférence au moins deux de ces filtres optiques (9 - 17) présentent des propriétés de filtrage qui se distinguent entre elles.

6. Système d'imagerie selon l'une des revendications 1 à 5,
**caractérisé par** un dispositif de maintien du dispositif de filtrage (8), le dispositif de maintien comprenant de préférence un dispositif de réglage, en particulier d'ajustement, de la position du dispositif de filtrage dans le dispositif de maintien.

7. Système d'imagerie selon l'une des revendications 1 à 6,
**caractérisé en ce que**
le deuxième dispositif d'imagerie (4) destiné à générer les images miroir virtuelles comprend au moins un miroir, de préférence plusieurs miroirs, le deuxième dispositif d'imagerie (4) formant de préférence un kaléidoscope.

8. Procédé d'imagerie plénoptique d'une zone d'objet, en particulier au moyen d'une caméra, dans lequel une zone d'objet est représentée par plusieurs dispositifs d'imagerie (3 - 5) disposés successivement dans la direction d'un axe optique (2), les dispositifs d'imagerie (3 - 5) comprenant un premier dispositif d'imagerie (3) pour générer une image intermédiaire réelle d'un objet dans un plan d'image intermédiaire, un deuxième dispositif d'imagerie (4) pour générer au moins une image miroir virtuelle de l'image intermédiaire réelle, disposée dans le plan d'image intermédiaire (6) en étant décalée par rapport à l'image intermédiaire réelle, et un troisième dispositif d'imagerie (5) pour représenter conjointement l'image intermédiaire réelle et l'image miroir virtuelle comme une image réelle sur une surface de réception d'image (7) à disposer à une distance axiale du plan d'image intermédiaire (6), les représentations de l'image intermédiaire réelle et/ou de l'une au moins des images miroir virtuelles étant filtrées séparément,
**caractérisé en ce que**
le filtrage est effectué dans le plan d'image intermédiaire (6) ou, en direction de l'axe optique (2), immédiatement devant ou derrière le plan d'image intermédiaire (6) et/ou directement devant la surface de réception d'image (7).

9. Procédé selon la revendication 8,
**caractérisé en ce que**
les positions, en direction de l'axe optique, des points de la zone d'objet représentés par au moins quelques des points de l'image, sont définies.

10. Procédé selon la revendication 8 ou 9,
**caractérisé en ce que**
dans les différentes représentations, au moins quelques des points d'image sont liés à des points de la zone d'objet qu'ils représentent, et, sur la base de ces liens, les positions des points dans la zone d'objet, en direction de l'axe optique (2) sont déterminées au moins en relation les unes par rapport aux autres.

11. Produit de programme informatique comprenant des instructions qui, lorsque le programme est exécuté par un ordinateur, amènent celui-ci à définir, à partir de représentations filtrées séparément de l'image intermédiaire réelle et/ou de l'une au moins des images miroir virtuelles générées par le système d'imagerie selon les revendications 1 à 7 ou par le procédé selon les revendications 8 à 10, les positions en direction de l'axe optique des points de la zone d'objet représentés par au moins quelques des points d'image.

12. Produit de programme informatique, en particulier selon la revendication 11, comprenant des instructions qui, lorsque le programme est exécuté par un ordinateur, amènent celui-ci à traiter des représentations filtrées séparément de l'image intermédiaire réelle et/ou de l'une au moins des images miroir virtuelles, en fonction du filtrage respectif effectué au moyen du système d'imagerie selon les revendications 1 à 7 ou par le procédé selon les revendications 8 à 10.

13. Support de données ou dispositif sur lequel est stocké le produit de programme informatique selon les revendications 11 et 12.

14. Signal porteur de données transmettant le produit de programme informatique selon l'une des revendications 11 à 12.
